# EUROPEAN PATENT APPLICATION

(11) **EP 4 539 040 A1**
(43) Date of publication of application: **16.04.2025**
(21) Application number: 24205708.1
(22) Date of filing: 09.10.2024
(51) Int. Cl.: G10K 15/08, G01H 7/00

(54) **A METHOD AND SYSTEM FOR SIMULATING THE PROPAGATION OF AN AUDIO SIGNAL IN A VIRTUAL ENVIRONMENT**

(30) Priority: 09.10.2023 GB 202315485
(71) Applicant: Sony Interactive Entertainment Europe Limited, London W1F 7LP (GB)
(72) Inventor: Jones, Michael Lee, London, W1F 7LP (GB); BUCHANAN, Christopher George, London, W1F 7LP (GB); ARMSTRONG, Calum, London, W1F 7LP (GB); SMITH, Alexei Ashton Derek, London, W1F 7LP (GB); PILATAKI MANIKA, Maria, London, W1F 7LP (GB)
(74) Representative: Gill Jennings & Every LLP

(57) **Abstract**

A computer-implemented method of simulating the propagation of an audio signal between a source and receiver in a virtual environment is disclosed. The method comprising: simulating reflections of an audio signal within the virtual environment to determine a plurality of audio paths between the source and receiver; determining an input audio signal to be propagated between the source and receiver by the plurality of audio paths; determining one or more audio paths having a delay that causes interference in the input audio signal; applying an adjustment to the determined audio paths to reduce the interference in the audio signal caused by the one or more audio paths. In this way, an audio simulation may be adapted according to the specific audio signal to reduce phase artefacts.

## Description

### FIELD OF THE INVENTION

Disclosed herein is a method and system for simulating the propagation of an audio signal between a source and receiver in a virtual environment, more specifically a method of improving the simulation of early reflections of an audio signal in a virtual environment.

### BACKGROUND

Interactive virtual environment systems combine audio and video to simulate the experience of immersive exploration of a three-dimensional virtual world, by rendering the environment as perceived from the viewpoint of an observer moving under real-time control by the user. Simulating a realistic perception of sound by the observer in the virtual environment is essential to provide an immersive experience, in which aural cues marry to the visual experience of the environment. Therefore simulating the acoustics and determining how sound propagates through the environment is a crucial task.

Simulation of sound propagation involves simulating reflections of an audio signal emitted from an audio source as it propagates along a multitude of propagation paths to a receiver and is reflected from surfaces within the virtual environment. There are a number of methods of simulating sound propagation in virtual environments. The propagation of sound from a source to a receiver can be considered in three components: (1) direct sound, representing the earliest arriving and strongest sound wave, (2) early reflections describing low order reflections arriving in an initial time period, for example in the first ~50 ms, where individual paths can be distinguished by the human ear, and (3) late reverberation, representing the sound when it has undergone many reflections and the human ear is no longer able to distinguish individual reflections.

The accurate simulation of early reflections is important as this is the component that proves the listener with most of the spatial information about an environment and so is crucial in adapting the user's experience of the sound to the specific virtual environment. Early reflections are usually calculated by geometric methods by explicitly computing linear propagation paths between a source and receiver, with vertices on surfaces in the virtual environment. The delay and attenuation can then be computed for each propagation path and the combination of these effects applied to an input audio signal to provide the simulated sound wave arriving at the receiver.

One issue with simulating early reflections is that generating multiple reflections of the same signal often results in undesired phase artifacts in the audio output. In particular, the playback of multiple copies of the same signal with slightly differing delays causes constructive and destructive interference, resulting in a "whooshing" sound as the receiver moves around in the virtual environment. This can be distracting for a user and detracts from the immersive experience of the virtual environment.

Accordingly there is a need for an improved method of simulating the propagation of audio signals in the virtual environment in which these undesired phasing artefacts are reduced.

### SUMMARY OF INVENTION

In a first aspect of the invention there is provided a computer-implemented method of simulating the propagation of an audio signal between a source and receiver in a virtual environment, the method comprising: simulating reflections of an audio signal within the virtual environment to determine a plurality of audio paths between the source and receiver; determining an input audio signal to be propagated between the source and receiver by the plurality of audio paths; determining one or more audio paths having a delay that causes interference in the input audio signal; applying an adjustment to the determined audio paths to reduce the interference in the audio signal caused by the one or more audio paths.

The delays that lead to phase artefacts when simulating reflections are dependent on the specific audio content of the audio signal to be propagated. In the present invention, the specific audio signal to be propagated is used to determine audio paths to be adjusted. Therefore, a simulation may be adapted according to the specific audio signal to reduce phase artefacts. Furthermore, only specific paths that provide the majority contribution to the phase artefacts are adjusted. This means that the minimum changes to the audio simulation are made to significantly reduce phase artefacts while maintaining the majority of the reflections and therefore still ensuring the spatial information provided by early reflections are provided.

An "adjustment" preferably comprises one or more of: culling an audio path, reducing the intensity of an audio path or providing a shift in the delay time associated with the audio path. The type of adjustment applied may be decided dynamically based on the severity of the interference. That is, the method may determine whether the audio path should be culled, have its intensity reduced, have the delay time shifted, or a combination thereof, based on the severity of the interference. The severity of the interference may be determined based on the phase artefact. For example, the duration of the phase artefact or the amplitude thereof may be used to determine the severity. Preferably the method comprises repeatedly simulating reflections of an audio signal during gameplay. Preferably the method comprises repeatedly simulating reflections of an audio signal as one or both of the source and receiver move within the virtual environment, thereby dynamically adjusting output audio. A path delay causing interference preferably comprises a path delay within a threshold of delay providing maximal interference. For example a path delay causing interference may comprise a path delay within a threshold of a 0.5 wavelength delay, the wavelength being a wavelength contained in the audio signal to be propagated, preferably the wavelength of a prominent audio feature. for example the threshold may be a 0.3 - 0.7 wavelength delay. In some examples a path delay causing interference may be determined based on a plurality of wavelengths within the audio signal to be propagated, for example a plurality of prominent wavelengths.

Determining one or more audio paths having a path delay causing interference for the input audio signal preferably comprises: determining the frequency of a prominent audio feature of the input audio signal; determining an audio path having a path delay that will cause interference at the determined frequency of the audio feature. A "prominent audio feature" preferably comprises a component of the input audio signal that is prominent to a lister. For example a component having a higher intensity or volume than other components or being in a portion of the frequency spectrum associated with increased sensitivity of human hearing.

Determining the frequency of a prominent audio feature of the input audio signal preferably comprises: determining a dominant frequency of the input audio signal. A dominant frequency may be defined as the highest magnitude sinusoidal component of the input audio signal. The dominant frequency may be determined by decomposing the input audio signal into a finite number of sinusoidal constituents and determining the sinusoidal constituents with the highest magnitude. In some examples a plurality of prominent audio features may be considered is determining path delays that will cause interference.

In other examples, determining the frequency of a prominent audio feature of the input audio signal comprises: determining a frequency or frequency range within the input audio signal having a greater intensity or volume than other frequencies in the input audio signal.

The prominent or dominant frequency is likely to be the frequency most heard by a listener and therefore interference at this frequency provides the most intrusive phase artefacts. By identifying one or more prominent audio features or dominant frequencies and using these to determine paths to adjust, the most significant phase artefacts can be diminished while preserving the majority of the audio and spatial content. Shifting the delay of these paths can be considered as a method of prioritising the prominent audio features, most important to the user, over other features. Introducing delay shifts may introduce interference at other frequencies but these are likely to be significantly less noticeable and less important to the user's experience of the music compared to interference at the frequencies of prominent audio features.

Preferably determining an audio path having a path delay that will cause interference at the frequency of the audio feature comprises: determining one or more audio paths having a delay within a predetermined threshold of a half-wavelength of the prominent frequency. Preferably the method comprises determining one or more audio paths have a delay within a predetermined threshold of an integer plus a half wavelength of a prominent frequency. A prominent frequency may comprise the frequency of a prominent audio feature or the frequency of a dominant frequency. Delays of a half wavelength, or an integer plus a half wavelength (i.e. n + 0.5 wavelengths, where n is an integer) lead to maximal destructive interference and therefore the most significant comb filtering effects. By adjusting paths so that there are no delays within a predetermined threshold of n + 0.5 wavelengths of a prominent frequency, the worst phase artefacts are removed.

In some examples determining one or more audio paths having a delay that causes interference in the input audio signal comprises: determining a source of the audio signal or an audio type of the audio signal; determining a characteristic frequency based on the source of the audio signal or the audio type of the audio signal; determining one or more audio paths having a delay that causes interference at the characteristic audio frequency. A source of the audio signal may be a character. An audio type may be speech. In these examples a characteristic frequency range for speech may be used to determine path delays causing interference. The wavelength range may be, for example, 100 - 120 Hz or 85 Hz to 255 Hz.

Preferably the method comprises simulating the propagation of an audio signal in a video game environment. Preferably determining the frequency of a prominent audio feature of the input signal comprises: at runtime (e.g. during gameplay), retrieving an audio data file comprising the input audio signal to be propagated; performing audio content analysis on the audio signal to determine the frequency of a prominent audio feature of the audio signal. Performing audio content analysis on the audio signal may comprise: calculating the spectral centroid of the input audio signal. In this way, when an audio signal is to be propagated at runtime, it is first analysed to determine path delays that should be avoided when simulating the propagation of an audio signal. Preferably the method is performed repeatedly during gameplay to continually apply an adjustment to one or more audio paths.

In other examples, determining the frequency of a prominent audio feature of the input signal comprises: at runtime, retrieving an audio data file comprising the input audio signal to be propagated and reading metadata associated with the audio data file, the metadata indicating the frequency of the prominent audio feature. In this way analysis of each audio signal is carried out prior to runtime, to reduce the computation requirement at runtime. In particular audio signal to be used at runtime, for example audio assets to be output during gameplay of a videogame, are analysed offline and information regarding prominent frequencies or path delays to be avoided is stored as metadata with the corresponding audio data. In this way, the metadata can simply be retrieved to determine how to adjust the paths during the audio simulation.

The metadata may encode a source of the audio signal or an audio type of the audio signal. In these examples e determining one or more audio paths having a delay that causes interference in the input audio signal may comprise: determining a source of the audio signal or an audio type of the audio signal; determining a characteristic frequency based on the source of the audio signal or the audio type of the audio signal; determining one or more audio paths having a delay that causes interference at the characteristic audio frequency.

The method preferably comprises performing audio content analysis on the audio signal offline, prior to simulating the propagation of an audio signal at runtime, to determine the frequency of a prominent audio feature of the audio signal; saving metadata comprising information on the prominent audio feature associated with an audio data file comprising the input audio signal.

Preferably, performing an adjustment to the determined audio paths to reduce the interference in the input audio signal caused by the one or more audio paths comprises: removing the one or more audio paths from the simulation of the propagation of the audio signal. In this way, those paths contributing to the most significant comb filtering effects are simply removed, whilst maintaining the majority of the reflections to ensure that the user still retains the majority of the spatial information conveyed by the early reflections. In other examples, performing an adjustment to the determined audio paths to reduce the interference in the input audio signal caused by the one or more audio paths comprises: reducing the intensity of the one or more audio paths in the simulation of the propagation of the audio signal. For example, the attenuation associated with the determined one or more audio paths may be increased.

Preferably performing an adjustment to the determined audio paths to reduce the interference in the input audio signal caused by the one or more audio paths comprises: applying a shift in the delay of the one or more audio paths. In this way, the reflection is retained but shifted to reduce the effects of interference. Therefore, a more complete audio simulation is provided but adjusted to avoid the worst effects of comb filtering. The user therefore still experiences the full audio and spatial information conveyed by the early reflections.

Performing an adjustment to the determined audio paths to reduce the interference in the input audio signal caused by the one or more audio paths comprises: increasing or decreasing the delay of the one or more audio paths by predetermined delay shift, wherein the delay shift is less than 5ms, preferably less than 1ms. By ensuring the delay shift is small, the effects are not noticeable to the user in the experience of the audio, but still act to remove the most significant phase artefacts. Shifts of this magnitude are not significant enough to be perceived by the user. In some examples, the magnitude of the applied shift in the delay is restricted to less than a predetermined percentage of the total delay of the audio path, for example less than 10%, less than 1% or less than 0.1%. This ensures that the delay is still interpreted substantially consistent with the geometry of the virtual environment. That is, the reflections experienced by the user do not depart substantially from those expected of the virtual environment, but the shift is significant enough to reduce the phase artefacts.

In some examples, the magnitude of the applied shift in the delay is restricted to a time corresponding to a change in path length that is less a half wavelength of the frequency of a prominent audio feature in the audio signal. In this way, it is ensured that the phase artefacts are reduced, without significant affecting the user experience of the reflections and the associated perception of the virtual space.

Preferably, simulating reflections of an audio signal within the virtual environment to determine a plurality of audio paths between the source and receiver comprises: simulating a primary audio path corresponding to the most direct propagation path of the audio signal between the source and receiver and a plurality of reflected paths corresponding to a path including at least tne reflection of the audio signal from a surface in the virtual environment; wherein the method comprises determining one or more reflected paths that have a delay relative to the primary path causing interference between the audio signal propagated along the primary path and the determined reflected paths. In this way, the delay of the reflected paths are measured relative to the delay of the primary path. The primary path, the most direct route between the source and receiver, generally had the greatest intensity and so interference with this primary path creates the most significant phase effects.

Preferably simulating reflections of an audio signal within the virtual environment to determine a plurality of audio paths between the source and receiver comprises: simulating up to nth order reflections from surfaces in the virtual environment, where n is less than 4 or less than 3. These are considered early reflections which provide the majority of the spatial information. In some examples, only first order reflections may be considered when determining whether to adjust an audio path, since these have the greatest intensity.

Preferably the virtual environment comprises a virtual gaming environment within a video game and the method comprises simulating reflections of an audio signal within the virtual gaming environment during gameplay. Video games require intensive audio simulations during gameplay and so the present method of addressing the phase artefacts issue in a computationally efficient method is particularly advantageous.

In a further aspect of the invention, there is provided a computer program comprising instructions that, when executed by a computer, cause the computer to perform the method of any preceding claims.

In a further aspect of the invention, there is provided a video gaming system comprising a processor configured to perform the method of any preceding claim.

### BRIEF DESCRIPTION OF DRAWINGS

Embodiments of the invention will now be described, by way of example, by reference to the drawings, in which:
Figure 1 schematically illustrates a method of simulating the propagation of an audio signal between a source and receiver in a virtual environment.
Figure 2 illustrates a flow diagram of a method of simulating the propagation of an audio signal between a source and receiver in a virtual environment.
Figure 3 schematically illustrates a system for simulating the propagation of an audio signal between a source and receiver in a virtual environment.

### DETAILED DESCRIPTION

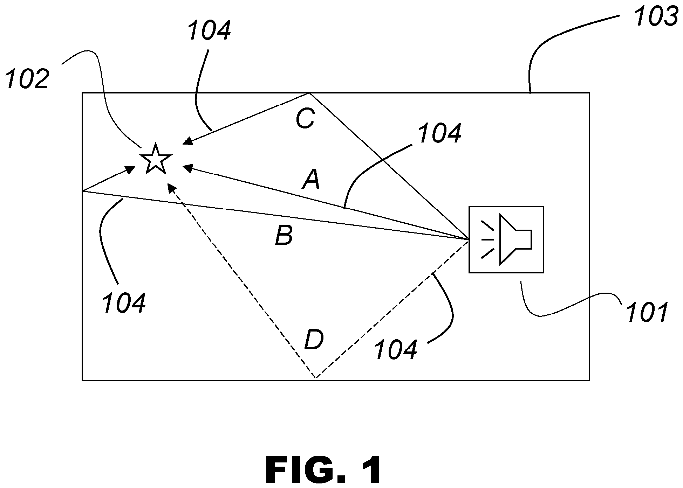

Figure 1 schematically illustrates a computer-implemented method of simulating the propagation of an audio signal between the source 101 and receiver 102 in a virtual environment 103. The method comprises simulating reflections of an audio signal within the virtual environment 103 to determine a plurality of audio paths 104 between the source 101 and receiver 102. The method then involves determining an input audio signal to be propagated between the source and receiver by the plurality of audio paths 104, determining one or more audio paths 104 having a delay that causes interference (i.e. interference above a threshold level of interference) in the input audio signal and applying an adjustment to the determines audio paths to reduce the interference in the audio signal caused by the one or more audio paths 104. By adjusting audio paths that cause interference, for example by shifting the delay in the determined audio paths or culling the audio paths completely, it is possible to significantly mitigate the phase artefacts produced when simulating multiple audio paths with small delays associated with the same audio signal. This method therefore allows to significantly improve overall audio quality and the perception of acoustics within a virtual environment.

The simulation of early reflections in a virtual environment is particularly important as this provides the listener with majority of the spatial information about an environment. This is because of the relatively high strengths, recognisable directionalities and distinct arrival times of the early reflections. In contrast, in the late reverberation phase when the sound has reflected from many surfaces in the environment, the impulse response resembles an exponentially decaying noise function with such a high density, the ear is no longer able to distinguish individual reflections such that usually statistical methods are used to model the late reverberation of an audio signal.

As illustrated in Figure 1, geometric methods are generally used to simulate early reflections, where "early reflections" are generally considered those arriving in the first 20 - 70 milliseconds of the audio being admitted. These generally involve low order reflections such as first, second and possibly third-order reflections from acoustically reflective surfaces within the virtual environment 103. Simulation methods use one of a number of different methods to determine propagation paths 104 between the source 101 and receiver 102 within the virtual environment 103. Then, for each of these propagation paths 104, a delay can be calculated, for example relative to a primary propagation path representing the most direct and earliest arriving sound wave at the receiver 102, which is generally of the greatest intensity. In Figure 1 path A represents the primary propagation path, direct between the source 101 that receiver 102, and paths B, C and D represent first order reflections from the boundary of the virtual environment 103. As can be seen in Figure 1, paths B, C and D are each longer than the primary propagation path A, and each have a differing delay of the audio signal arriving at the receiver 102.

There are a number of well-known methods for determining the propagation paths 104 between a source 101 and receiver 102 in a virtual environment 103. These include image source methods that involve computing specular reflection paths by considering virtual sources generated by mirroring the location of the audio source 101 over each reflective surface of the environment. Other methods include ray-tracing methods which find propagation paths between a source 101 and receiver 102 by generating rays emanating from the source position and following them through the environment until an appropriate set of rays has been found reaching a receiver position. Beam tracing methods determine propagation paths from a source by recursively tracing pyramidal beams (sets of rays) through the environment.

Irrespective of the method, once the propagation paths have been determined the effects of the paths are combined into a filter that is applied to a source audio signal. This involves modelling the attenuation and scattering of sound as it travels along each path which, depending on the complexity of the simulation, may take into account source emission patterns, distance attenuation, atmospheric scattering, reflectance functions, diffraction models and receiver sensitivity. The combined effects of the paths are applied as a filter to the source signal to simulate the audio arrive at receiver location.

As described above, when multiple reflections of the same signal generated with different delays there are phase artefacts or "comb filtering" in the audio signal, which become particularly apparent as a receiver moves around in the virtual environment 103. Particular subsets of the reflections may have a specific path delay that significantly interferes with the original signal more than other paths. This can be dependant on the audio content of the audio signal. For example, if an audio signal has important features around 1 khz, a time delay of 0.5 ms (a 1/2 wavelength of 1 khz) will produce significant destructive interference with the original signal. Maximal destructive interference is also experienced where the delay is n + 0.5 wavelengths, where n is an integer, e.g. 0.5, 1.5, 2.5, 3.5 wavelengths etc. A delay of 1 wavelength at 1000Hz would result in comb filtering at 500Hz (0.5 wavelengths). It would also result in comb filtering at 1500Hz where there is a delay of 1.5 wavelengths then again at 3500Hz where there is a delay of 2.5 wavelengths. The comb filtering effect is most noticeable when either the delay between signals is constant, the delay is changing in a smooth predictable pattern (for example a linear increase), or the delay corresponds to half the wavelength of a frequency that is prominent within the audio signal, therefore causing maximal destructive interference.

Although these are the conditions for maximal interference, there is likely to be significant interference even if the delay is slightly above or below a half wavelength of a prominent frequency. For example, the above situation with a prominent frequency of 1 khz is likely to produce significant interference for path delays of 0.45 ms. For this reason, preferably the method involves determining audio paths having a path delay within a threshold of a delay providing maximal interference. For example, the method may involve identifying paths having a delay of 0.4 - 0.6 or 0.3 - 0.7 wavelengths (i.e. delays of (n + x)λ where, for example 0.4 < x < 0.6).

In the present invention, specific selected propagation paths 104 within the plurality of simulated propagation paths 104 are determined as particularly contributing to comb filtering and then these specific paths may be culled or their delay shifted by a small amount to significantly reduce the effects of comb filtering. This method allows for the quality of the audio and the spatial information and immersion of the user to be maintained while significantly reducing the unwanted phase artifacts.

In one example of the invention, the method involves determining one or more of the audio paths 104 to be adjusted (culled or delay shifted) by analysing the audio signal to be propagated to determine its audio content and therefore particular paths that correspond to delays that will introduce unwanted phase artefacts. The method may involve determining the frequency of a prominent audio feature of the input audio signal. A prominent audio feature can be considered a feature which is particularly identifiable by a user, for example due to it falling within a particular frequency range for example one in which the human ear is particularly sensitive, or it having a particular increased intensity relative to other frequencies within the input audio signal.

There are a number of known methods for identifying the frequency of prominent audio features in an audio signal. For example, the method may comprise determining one or more dominant frequencies, where the dominant frequencies may be identified as those that carry more energy relative to other frequencies in the spectrum, or those that are most heard by a user. Alternatively, a frequency or frequency range within the input audio signal may be identified by a frequency or frequency range having a greater intensity or volume than other frequencies in an input audio signal. This can be determined as the frequency of the prominent audio features and used to determine delays and therefore paths contributing to comb filtering to a greater extent than other paths.

In other examples other known methods of audio content analysis may be applied to the input audio signal to determine frequencies of interest that can then be used to identify paths contributing to interference at these frequencies. One such method of audio content analysis is the calculation of the spectral centroid of the input audio signal. The spectral centroid is a measure used to characterise a spectrum and indicates where the centre of mass and spectrum is located and has a connection with the impression of brightness of the sound. The frequency calculated as the spectral centroid may therefore be used to determine delays and accordingly paths most contributing to interference effects relative to the primary audio signal 104.

In other examples, the method may involve determining the type or source of the audio signal to be propagated, determining a frequency or frequency range associated with the particular type or source of audio signal and using this to determine path delays likely to cause interference. For example, is an audio signal to be propagated is determined as speech, then the method may involve identifying path delays that would cause interference for frequencies within a characteristic frequency rage for speech. For example if an audio signal to be propagated is tagged as dialogue, the method may involve identifying path delays for frequencies within a range of 100 - 120 Hz, or to cover a broader range of speech frequencies 85 to 255 Hz. Similarly audio signals associated with common sound effects like footsteps, or music may be identified, and a characteristic frequency range used.

Once one more frequencies or frequency bands associated with a prominent audio feature have been determined, then audio paths having a delay that will cause interference at the standing frequency of the audio feature can be determined. For example, in Figure 1, path D is identified as having a delay that will cause interference at a frequency of a prominent audio feature in the audio signal. This path can then simply be culled to remove the most significant component of the phase artefact experience by a user. As described in the example above, the audio source may be relatively tonal with important features around 1 kHz and propagation path D may be determined as having a delay which is a multiple of 0.5 milliseconds, a 1/2 wavelength of 1 kHz, which would produce significant destructive interference with the primary audio path A between the source and receiver. By removing this path the comb filtering effects are diminished and the majority of the spatial information provided by the other paths is maintained.

In a preferable example, rather than removing the identified audio path entirely, a small shift may be applied to the delay to shift the phase and therefore remove the worst effects of the destructive interference with the original signal. For example the delay could be shifted by plus or minus 0.5 milliseconds, which is negligible for a 0.5 second delay and therefore would not be noticeable by the user in interpreting the spatial surroundings of the virtual environment, but would significantly improve overall audio quality. The shift in the delay could be limited to a maximum of 10% of the delay associated with the propagation path or for reduced impacts on the interpretation of the spatial surroundings be limited further to for example 1% or 0.1% of the path delay associated with that path. In another example the delay could be restricted to a maximum corresponding path length. For example, the half wavelength of the frequency of a prominent audio feature (for example the dominant frequency) could be set as the maximum corresponding path shift. In other words, the maximum delay shift is the time it takes for sound to propagate a half wavelength of the dominant frequency.

In some examples the method may involve considering the delays across a plurality of computed audio paths when adjusting an audio path, so as to not cause further interference by the adjustment made to an audio path. For example, for two audio paths having respective delays at 0.25 wavelengths and 0.5 wavelengths, them performing an adjustment to alter the 0.5 wavelength delay to 0.75 would interfere with the first delay (instead of the original signal). Similarly, adjusting the second delay to also be 0.25 would cause constructive interference with the first path. In this case, an adjustment may be made to both paths, for example to 0.4 and 0.6 as a compromise. Alternatively one or both paths could instead be culled. This illustrates how, preferably, each path is not considered individually but decisions on adjustments are taken based on a plurality of audio paths and associated delays. In this way, a map/matrix of delay paths can be determined and then redistributed accordingly as a group for the optimum output as a whole.

As described above, the methods of the present invention have particular advantages when applied in the context of video game environments, which require the simulation of audio propagation at run time and are dependent on moving objects within the virtual environment such as the player character at a receiver location 102. The method may be applied in a number of different ways in a video gaming system. In one example, audio content analysis of audio signals may be carried out offline and stored as metadata along with the audio object itself. For example audio assets, i.e. audio data associated with sound effects and other audio to be deployed during gameplay, may be stored together with data comprising information about prominent features within the audio asset or information about delays that will lead to significant interference or comb filtering effects of the corresponding sound asset. This information about prominent frequencies or delay values causing interference may be stored as metadata with the audio data file of the audio assets. During simulation of the propagation of an audio signal at runtime, i.e. during game play, the metadata may be read when retrieving the audio asset for propagation, and audio paths associated with a delay causing interference at the prominent audio feature frequencies may be adjusted by being removed or phase shifted as described above.

This may be advantageous because it reduces the computational requirement of audio content analysis at runtime and simply stores the key information usable by the audio propagation algorithms to determine and adjust certain propagation paths 104. In other examples, audio content analysis may be carried out at runtime to detect frequencies leading to comb filtering effects and therefore determine delay values to avoid. When carried out at runtime efficient methods of identifying prominent audio features may be used for example the calculation of a spectral centroid of the audio signal to determine the problem frequency and accordingly delays that should be avoided when simulating propagation paths.

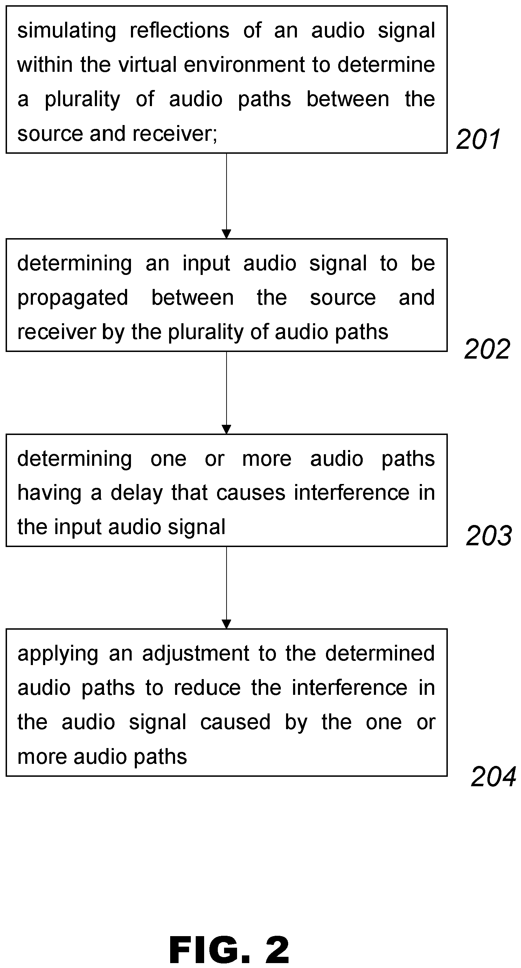

Figure 2 shows a flow diagram of a method according to the present invention. At step 201 the step of simulating reflections of an audio signal within the virtual environment to determine the polarity of audio paths between the source and receiver is performed. Step 202 involves determining input audio signal to be propagated between the audio source and receiver by the plurality of audio paths. Step 203 involves determining one or more audio paths having a delay the causes interference in the audio signal and step 204 involves applying an adjustment to the determined audio paths to reduce the interference in the audio signal caused by the one or more audio paths.

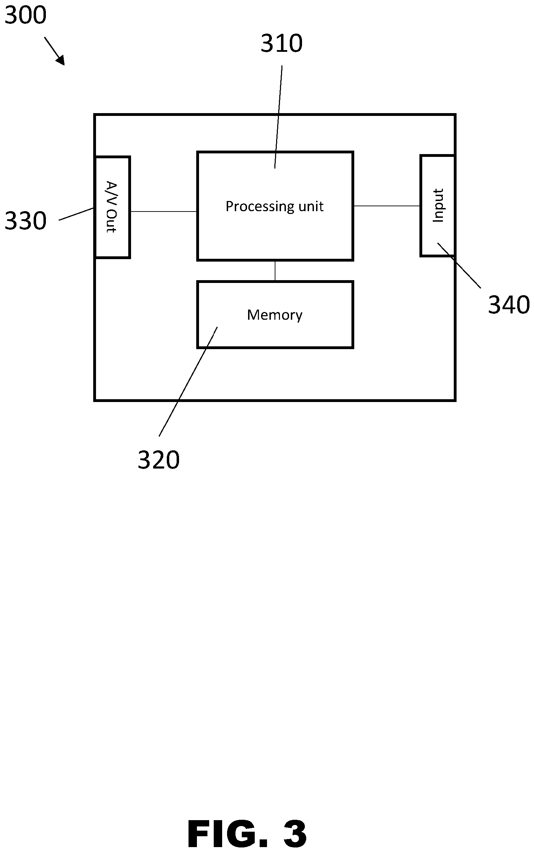

Figure 3 schematically illustrates a video gaming system 300 according to the present invention. The video games system 300 comprises a processing unit 310 configured to perform the methods described for simulating the propagation of an audio signal in a virtual environment and output the simulated audio output with the audio output 330. In this example, the system one also comprises a local memory 320 which may be used to store audio data files corresponding to an audio signal to be propagated. As described above, for each audio data file, data may be stored indicating the prominent frequencies of the audio signal and/or delays that should be avoided when simulating the propagation of the audio signal to avoid comb filtering effects.

## Claims

1. A computer-implemented method of simulating the propagation of an audio signal between a source and receiver in a virtual environment, the method comprising:
simulating reflections of an audio signal within the virtual environment to determine a plurality of audio paths between the source and receiver;
determining an input audio signal to be propagated between the source and receiver by the plurality of audio paths;
determining one or more audio paths having a delay that causes interference in the input audio signal;
applying an adjustment to the determined audio paths to reduce the interference in the audio signal caused by the one or more audio paths.

2. The computer-implemented method of claim 1, wherein determining one or more audio paths having a path delay causing interference for the input audio signal comprises:
determining a dominant frequency of a prominent audio feature of the input audio signal;
determining an audio path having a path delay that will cause interference at the determined frequency of the audio feature.

3. The computer-implemented method of claim 2, wherein determining the frequency of a prominent audio feature of the input audio signal comprises:
determining a frequency or frequency range within the input audio signal having a greater intensity or volume than other frequencies in the input audio signal.

4. The computer-implemented method of claim 2 or claim 3, wherein determining the frequency of a prominent audio feature of the input signal comprises:
at runtime, retrieving an audio data file comprising the input audio signal to be propagated;
performing audio content analysis on the audio signal to determine the frequency of a prominent audio feature of the audio signal; wherein performing audio content analysis on the audio signal comprises:
calculating the spectral centroid of the input audio signal.

5. The computer-implemented method of claim 2 or claim 3, wherein determining the frequency of a prominent audio feature of the input signal comprises:
at runtime, retrieving an audio data file comprising the input audio signal to be propagated and reading metadata associated with the audio data file, the metadata indicating the frequency of the prominent audio feature.

6. The computer-implemented method of claim 5 comprising:
performing audio content analysis on the audio signal offline, prior to simulating the propagation of an audio signal at runtime, to determine the frequency of a prominent audio feature of the audio signal;
saving metadata comprising information on the prominent audio feature associated with an audio data file comprising the input audio signal.

7. The computer-implemented method of any preceding wherein determining one or more audio paths having a delay that causes interference in the input audio signal comprises:
determining a source of the audio signal or an audio type of the audio signal;
determining a characteristic frequency based on the source of the audio signal or the audio type of the audio signal;
determining one or more audio paths having a delay that causes interference at the characteristic audio frequency.

8. The computer-implemented method of any preceding claim wherein performing an adjustment to the determined audio paths to reduce the interference in the input audio signal caused by the one or more audio paths comprises:
removing the one or more audio paths from the simulation of the propagation of the audio signal.

9. The computer-implemented method of any preceding claim wherein performing an adjustment to the determined audio paths to reduce the interference in the input audio signal caused by the one or more audio paths comprises:
applying a shift in the delay of the one or more audio paths.

10. The computer-implemented method of any preceding claim wherein simulating reflections of an audio signal within the virtual environment to determine a plurality of audio paths between the source and receiver comprises:
simulating a primary audio path corresponding to the most direct propagation path of the audio signal between the source and receiver and a plurality of reflected paths corresponding to a path including at least one reflection of the audio signal from a surface in the virtual environment;
determining one or more reflected paths that have a delay relative to the primary path causing interference between the audio signal propagated along the primary path and the determined reflected paths; and
adjusting the delay on each of the plurality of reflected paths to reduce both the interference between each reflected path and the primary audio path and between individual reflected paths.

11. The computer-implemented method of any preceding claim wherein applying an adjustment to the determined audio paths comprises:
adjusting the path delay associated with a plurality of audio paths to minimise the overall interference between the plurality of audio paths.

12. The computer-implemented method of any preceding claim where the virtual environment comprises a virtual gaming environment within a video game and the method comprises simulating reflections of an audio signal within the virtual gaming environment during gameplay.

13. The computer-implemented method of any preceding claim further comprising propagating the input audio signal across the adjusted simulated audio paths to simulate perception of the audio signal at the receiver location.

14. A computer program comprising instructions that, when executed by a computer, cause the computer to perform the method of any preceding claims.

15. A video gaming system comprising a processor configured to perform the method of any preceding claim.
